# EUROPÄISCHE PATENTANMELDUNG

(11) **EP 2 047 771 A2**
(43) Veröffentlichungstag der Anmeldung: **15.04.2009**
(21) Anmeldenummer: 08016458.5
(22) Anmeldetag: 18.09.2008
(51) Int. Cl.: A47C 27/14

(54) **Polsterelement für Sitz-/Liegemöbel**

(30) Priorität: 10.10.2007 DE 102007048619
(71) Anmelder: Dunlopillo Marketing GmbH, 63450 Hanau (DE)
(72) Erfinder: Brüggerhoff, Thomas, 60439 Frankfurt am Main (DE); Wohlfarth, Werner, Dr., 63755 Alzenau (DE)
(74) Vertreter: Manitz, Finsterwald & Partner GbR

(57) **Zusammenfassung**

Die Erfindung betrifft ein Polsterelement für ein Sitz-/Liegemöbel, insbesondere eine Matratze oder einen Matratzenkern, mit einem ersten Teil und einem zweiten Teil, wobei das erste Teil aus vulkanisiertem LatexSchaum und das zweite Teil aus einem nicht vulkanisierten Material besteht. Zur Vereinfachung der Herstellung und zur Erweiterung der Gestaltungsmöglichkeiten ist das erste Teil oder das zweite Teil von dem jeweils anderen Teil umschäumt.

## Beschreibung

Die vorliegende Erfindung betrifft ein Polsterelement für ein Sitz-/Liegemöbel, insbesondere eine Matratze oder einen Matratzenkern, mit einem ersten Teil und einem zweiten Teil, wobei das erste Teil aus vulkanisiertem Latex-Schaum und das zweite Teil aus einem nicht vulkanisierten Material besteht.

Vulkanisierter Latex-Schaum, oft vereinfachend "Latex" genannt, ist ein häufig verwendetes Basismaterial für Matratzenkerne, da er sich durch eine hohe Punktelastizität sowie eine gute Haltbarkeit auszeichnet. Allerdings weist vulkanisierter Latex-Schaum auch einige Eigenschaften auf, die je nach Anwendungsfall unerwünscht sein können, beispielsweise ein hohes spezifisches Gewicht sowie eine relativ geringe Steifigkeit. Aus diesem Grund kann es vorteilhaft sein, dass bestimmte Teilbereiche einer Matratze aus vulkanisiertem Latex-Schaum bestehen, während andere Teilbereiche aus einem nicht vulkanisierten Material bestehen. Beispielsweise sind Matratzen bekannt, bei denen Latex-Komponenten sowie Schaumstoff-Komponenten lagenweise übereinander angeordnet sind. Dabei werden üblicherweise die Latex-Lagen und die Schaumstoff-Lagen miteinander verklebt, was grundsätzlich den Herstellungsaufwand erhöht. Ferner besteht ein Bedarf nach erweiterten Gestaltungsmöglichkeiten derartiger kombinierter Matratzen.

Aufgabe der Erfindung ist es daher, ein Polsterelement der eingangs genannten Art zu schaffen, das einfach, schnell und kostengünstig in der Herstellung ist und zusätzlich erweiterte Gestaltungsmöglichkeiten bietet.

Diese Aufgabe wird durch die in Anspruch 1 genannten Merkmale und insbesondere dadurch gelöst, dass das erste Teil oder das zweite Teil von dem jeweils anderen Teil umschäumt ist.

Dadurch dass ein Teil von dem anderen Teil umschäumt ist, entfällt die aufwändige Klebeverbindung zwischen den beiden Teilen. Außerdem wird es dadurch ermöglicht, vorgefertigte Teile in ein Polsterelement zu integrieren, die aufgrund ihrer Form oder Beschaffenheit zum Verkleben ungeeignet sind.

Eine weitere Aufgabe der Erfindung besteht darin, ein Verfahren zur Herstellung eines Polsterelements der eingangs genannten Art anzugeben, das einfach, schnell und kostengünstig ausgeführt werden kann und das erweiterte Gestaltungsmöglichkeiten in Bezug auf das herzustellende Polsterelement eröffnet.

Diese Aufgabe wird durch die Merkmale von Anspruch 10 gelöst.

Erfindungsgemäß wird zur Herstellung eines Polsterelements der oben genannten Art zunächst das erste Teil oder das zweite Teil hergestellt. Anschließend wird eine Gießform bereitgestellt. Das zuerst hergestellte Teil wird in der Gießform angeordnet und mit Material des jeweils anderen Teils umschäumt.

Dadurch dass ein vorgefertigtes Polsterelementteil in einer Gießform mit einem Schaum-Material umschäumt wird, werden die üblicherweise erforderlichen Verfahrensschritte zum Verkleben oder anderweitigen Verbinden der unterschiedlichen Komponenten vermieden. Außerdem wird es durch das erfindungsgemäße Verfahren erleichtert, Funktionsteile mit beliebiger äußerer Form in ein Polsterelement zu integrieren, da keine Konturenanpassung des einen Teils an das andere Teil erforderlich ist.

Mögliche Weiterbildungen der Erfindung sind in den abhängigen Ansprüchen, der Zeichnung sowie der Beschreibung angegeben.

Vorzugsweise besteht das zweite Teil aus einem offenporigen Material und besonders bevorzugt aus Polyurethan-Schaumstoff, auch PUR-Schaumstoff genannt. Derartige Materialien zeichnen sich durch ein geringes spezifisches Gewicht, eine hohe Formstabilität sowie geringe Herstellungskosten aus.

Gemäß einer bevorzugten Ausführungsform besteht das zweite Teil aus einem PUR-Kaltschaum. PUR-Kaltschäume weisen eine in weiten Bereichen variierbare Stauchhärte auf und sind ohne Nachheizprozess herstellbar.

Der vulkanisierte Latex-Schaum ist vorzugsweise in den Poren des offenporigen Materials verankert. Dies gewährleistet eine feste und dauerhafte Verbindung zwischen den beiden unterschiedlich beschaffenen Polsterelementteilen, ohne dass dazu eine Klebeverbindung notwendig wäre.

Gemäß einer vorteilhaften Ausgestaltung der Erfindung ist das zweite Teil von dem ersten Teil umschäumt, das heißt ein Teil aus einem nicht vulkanisierten Material ist von vulkanisiertem Latex-Schaum umschäumt, wodurch sich herstellungstechnische Vorteile ergeben.

Eines der beiden Teile, insbesondere das erste Teil, bildet vorzugsweise ein Basisteil des Polsterelements. Eines der beiden Teile, insbesondere das zweite Teil, bildet vorzugsweise ein Funktionsteil des Polsterelements.

Damit kann man beispielsweise eine Latex-Matratze schaffen, die durch ein Funktionsteil oder mehrere Funktionsteile aus einem nicht vulkanisierten Material bezüglich bestimmter Eigenschaften verbessert ist.

Zweckmäßigerweise weisen das erste Teil und das zweite Teil eine erkennbar unterschiedliche Färbung auf, so dass das Vorliegen unterschiedlich beschaffener Polsterelementteile unmittelbar ersichtlich ist und eine eventuell erforderliche Ausrichtung des Polsterelements anhand der Anordnung der Teile leicht vorgenommen werden kann. Insbesondere können so auf einfache Weise unterschiedliche Liegezonen des Polsterelements farblich differenziert werden.

Gemäß einer weiteren bevorzugten Ausführungsform weist eines der beiden Teile, insbesondere das zweite Teil, zumindest in einem Abschnitt eine Kontur mit komplexer Formgebung auf. Gegenüber einheitlichen, unstrukturierten Oberflächen bieten derartige Konturen ein erhöhtes Gestaltungspotenzial bezüglich der Funktionalität. Beispielsweise kann ein die Elastizität beeinflussendes PUR-Funktionsteil innerhalb einer Latex-Matratze vorgesehen sein, wobei durch eine geeignete komplexe Querschnittsgestaltung des PUR-Funktionsteils eine räumliche Variation der Elastizität erzielt wird.

Vorzugsweise bildet ein Abschnitt des umschäumten Teils einen Abschnitt der Außenfläche des Polsterelements. Das zuvor erwähnte PUR-Funktionsteil kann sich beispielsweise bis zur Oberfläche einer Seite der Matratze erstrecken, so dass es von außen erkennbar ist.

Besonders bevorzugt ist eine Seite des Polsterelements im Wesentlichen vollständig durch einen Oberflächenabschnitt des ersten Teils gebildet und die davon abgewandte Seite des Polsterelements im Wesentlichen vollständig durch einen Oberflächenabschnitt des zweiten Teils. Beispielsweise kann das Polsterelement derart ausgebildet sein, dass es eine Latex-Seite und eine PUR-Seite gibt. Ein Benutzer kann dann entsprechend seiner individuellen Schlafgewohnheiten entscheiden, welche Material-Seite er zum Körper hin ausrichtet.

Gemäß einer weiteren vorteilhaften Ausgestaltung der Erfindung ist das zweite Teil in einem umlaufenden Randbereich des Polsterelements angeordnet. Das zweite Teil kann demzufolge beispielsweise einen PUR-Rand um eine Latex-Matratze bilden. Besonders bevorzugt bildet das zweite Teil eine formstabile Sitzkante. Derartige Sitzkanten verhindern ein unerwünschtes Einsinken eines Benutzers beim Sitzen auf dem Rand der Matratze und finden somit insbesondere bei sogenannten "Seniorenmatratzen" zur Erleichterung des Sitzens und Aufstehens Verwendung.

Gemäß einer weiteren zweckmäßigen Ausgestaltung ist das erste Teil im Schulterbereich des Sitz-/Liegemöbels angeordnet. Alternativ oder zusätzlich kann das erste Teil im Beckenbereich des Sitz-/Liegemöbels angeordnet sein. In diesen Bereichen ist ein tieferes Einsinken wünschenswert, welches durch Teile aus punktelastischem Latex besonders gut gewährleistet werden kann. Umgekehrt ist es auch sinnvoll, dass das zweite Teil im Lendenbereich des Sitz-/Liegemöbels angeordnet ist, da beispielsweise PUR-Schaum eine stärkere Abstützung bewirken kann.

Vorzugsweise weisen das erste Teil und/oder das zweite Teil Ausnehmungen auf, die sich von einer Seite des Polsterelements bis zu der davon abgewandten Seite erstrecken. Derartige Ausnehmungen werden auch als "Stollen" bezeichnet und dienen der Zirkulation von Luft und Feuchtigkeit zur Erreichung eines guten Schlafklimas.

Eine zweckmäßige Ausgestaltung des erfindungsgemäßen Verfahrens zur Herstellung eines Polsterelements sieht vor, dass das zuerst hergestellte Teil das zweite Teil bildet, also aus einem nicht vulkanisierten Material besteht. Insbesondere bietet es sich an, vorgefertigte PUR-Teile mit Latex zu umschäumen.

Gemäß einer Ausführungsform der Erfindung weist das hergestellte Teil zumindest in einem Abschnitt eine Kontur mit komplexer Formgebung auf.

Bevorzugt wird das zuerst hergestellte Teil derart in der Gießform angeordnet, dass es beim Füllen der Gießform im Wesentlichen vollständig von dem Schaum-Material umschlossen wird. Dadurch wird eine besonders stabile Verbindung zwischen den beiden Polsterelementteilen erreicht. Zusätzlich besteht die Möglichkeit, das Vorliegen eines Teils aus nicht vulkanisiertem Material von außen nicht erkennbar zu machen, was für bestimmte Anwendungen vorteilhaft sein kann.

Gemäß einer bevorzugten Ausgestaltung wird das zuerst hergestellte Teil in einem umlaufenden Randbereich der Gießform angeordnet, so dass es später beispielsweise als formstabile Sitzkante dienen kann.

Umgekehrt kann das zuerst hergestellte Teil in einem zentralen Bereich der Gießform angeordnet werden und beispielsweise aus einem weniger formstabilen Material bestehen. Durch das Umschäumen mit formstabilem Material wird somit gleichermaßen ein Polsterelement mit formstabiler Sitzkante gebildet.

Vorzugsweise erfolgt das Umschäumen des in der Gießform angeordneten Teils mit flüssigem Latex-Schaum, wodurch sich herstellungstechnische Vorteile ergeben.

Zweckmäßigerweise wird der flüssige Latex-Schaum nach dem Füllen der Gießform vulkanisiert, um eine Verfestigung des Schaums zu erreichen.

Gemäß einer besonders zweckmäßigen Ausgestaltung der Erfindung erfolgt das Vulkanisieren des flüssigen Latex-Schaums durch Bestrahlung der Gießform mit elektromagnetischer Mikrowellenstrahlung. Diese Maßnahme ermöglicht ein schnelles und gleichmäßiges Vulkanisieren, da die Mikrowellenstrahlung den flüssigen Latex-Schaum homogen durchdringt und keine Wärmeleitungsverluste auftreten, welche ansonsten einer Umschäumung entgegenstehen können.

Die Bestrahlung der Gießform wird vorteilhafterweise allseitig in einer die gesamte Gießform aufnehmenden Bestrahlungskammer durchgeführt, wodurch ein besonders effizientes Vulkanisieren möglich wird.

Bevorzugt besteht die Gießform daher aus einem Glasfaserverbundstoff, um ein möglichst ungehindertes Eindringen der Mikrowellenstrahlen in den flüssigen Latex-Schaum zu ermöglichen.

Gemäß einer weiteren Ausführungsform weist mindestens ein Abschnitt der Innenfläche der Gießform stiftartige Vorsprünge auf, die sich vom Boden der Gießform bis zu einer maximalen Füllhöhe erstrecken. Diese Vorsprünge sorgen für die Bildung von Ausnehmungen, welche später als Stollen der Zirkulation von Luft und Feuchtigkeit dienen.

Die Erfindung wird im Folgenden beispielhaft unter Bezugnahme auf die Zeichnungen beschrieben. In diesen ist:
- Fig. 1: eine Querschnittansicht einer Ausführungsform des erfindungsgemäßen Polsterelements; und
- Fig. 2: eine Draufsicht auf eine andere Ausführungsform des erfindungsgemäßen Polsterelements.

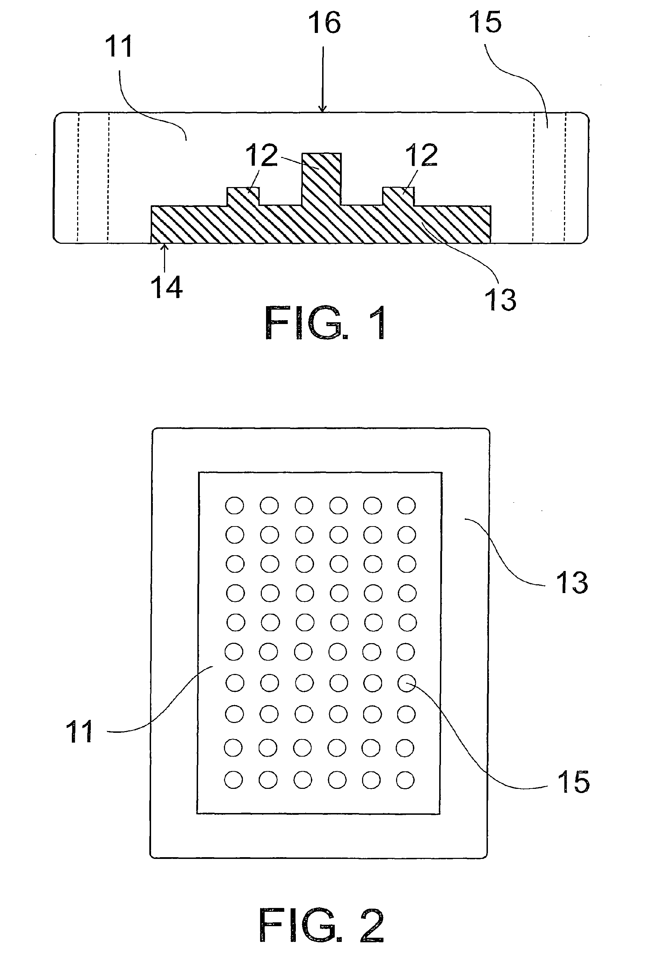

Das in Fig. 1 in Schnittdarstellung gezeigte Polsterelement ist ein Matratzenkern, der aus einem ersten Teil 11 und einem zweiten Teil 13 zusammengesetzt ist. Das erste Teil 11 besteht aus vulkanisiertem Latex-Schaum und wird nachfolgend auch als Latex-Teil bezeichnet. Das zweite Teil 13 besteht hingegen aus einem Polyurethan-Schaumstoff und wird nachfolgend auch als PUR-Teil bezeichnet. Das PUR-Teil 13 ist von dem Latex-Teil 11 umschäumt, so dass insgesamt ein einstückig ausgebildeter Matratzenkern ohne Klebeverbindungsschichten vorliegt. Alternativ könnte auch das Latex-Teil 11 von dem PUR-Teil 13 umschäumt sein. Zur späteren Verwendung als Matratze für Betten kann der Matratzenkern von einem Textilbezug aus Frottee, Velours oder dergleichen umhüllt sein.

Der verwendete Schaumstoff ist ein offenporiger PUR-Schaumstoff, wie er bei der Matratzenherstellung üblicherweise verwendet wird und den Fachleuten bekannt ist. Der vulkanisierte Latex-Schaum ist in den Poren des PUR-Schaumstoffs verankert, wodurch sich eine feste und dauerhafte Verbindung zwischen dem Latex-Teil 11 und dem PUR-Teil 13 ergibt.

Das PUR-Teil 13 dient gemäß der in Fig. 1 dargestellten Ausführungsform als Funktionsteil zur gezielten Beeinflussung des Härtegrads des Matratzenkerns. Es ist jedoch auch vorstellbar, dass das PUR-Teil 13 das Basisteil des Polsterelements und das Latex-Teil 11 ein Funktionsteil bildet.

Wie in Fig. 1 zu erkennen ist, umfasst das PUR-Teil 13 eine plattenförmige horizontale Basis, von der aus sich drei entlang der Längsseite der Matratze verlaufende Stege 12 unterschiedlicher Höhe erstrecken. Dadurch wird erreicht, dass die Nachgiebigkeit der Matratze im Vergleich zu einem homogenen Latex-Teil im zentralen Bereich deutlich verändert ist, während sie sich in Richtung der Randbereiche kontinuierlich an das Niveau von reinem Latex angleicht. Eine derartige Feinabstufung der Matratzenhärte kommt einer verbesserten Ergonomie, das heißt einer besseren Anpassung der Matratze an unterschiedliche Körperzonen, entgegen. Das Integrieren eines derart komplex geformten PUR-Teils 13 in eine Latex-Matratze ist unter Verwendung einer herkömmlichen Klebeverbindung nur unter beträchtlichem Herstellungsaufwand möglich, da in diesem Fall die Negativkontur des PUR-Teils 13 mit ausreichender Genauigkeit in das Latex-Teil 11 geschnitten werden muss. Abweichend von der dargestellten Querschnittsform sind noch zahlreiche weitere Ausprägungen des PUR-Teils 13 vorstellbar.

Wie in Fig. 1 zu sehen ist, schließt eine Seite des PUR-Teils 13 bündig mit einer Außenseite 14 der Matratze ab, während die davon abgewandte Außenseite 16 durch das Latex-Teil 11 gebildet wird. Da das PUR-Teil 13 außerdem eine Färbung aufweist, die sich deutlich von dem Latex-Teil 11 unterscheidet, ist das Vorhandensein eines PUR-Funktionsteils bzw. dessen Lage unmittelbar erkennbar. Die Matratze könnte auch derart gestaltet sein, dass eine komplette Flachseite der Matratze durch die Oberfläche des PUR-Teils 13 gebildet ist. In diesem Fall würde die Matratze eine Latex-Seite und eine davon abgewandte PUR-Seite aufweisen. Ein Benutzer könnte dann die Matratze entsprechend ausrichten, je nachdem, ob er das Schlafen auf Latex oder auf PUR bevorzugt.

Das Latex-Teil 11 weist ferner Ausnehmungen 15 auf, welche sich von einer Außenseite 14 des Latex-Teils 11 bis zur davon abgewandten Außenseite 16 erstrecken. Diese sogenannten Stollen sorgen für eine ausreichende Luftzirkulation durch die Matratze hindurch, um ein angenehmes Schlafklima zu gewährleisten. Zusätzlich kann der Härtegrad der Matratze durch die Größe und Anordnung der Stollen räumlich variabel beeinflusst werden. Diese Art der Elastizitätsanpassung kann auch mit der oben dargestellten PUR-Teil-Formgebung in geeigneter Weise kombiniert werden.

In Fig. 2 ist eine alternative Ausführungsform eines erfindungsgemäßen Polsterelements in Draufsicht dargestellt. Ein quaderförmiges Teil 11 aus vulkanisiertem Latex-Schaum bildet das Basisteil einer Latex-Matratze. Dieses Basisteil 11 ist von einem umlaufenden Rahmenteil 13 aus PUR umgeben, wobei das PUR-Teil 13 wie bei der zuvor dargestellten Ausführungsform von dem Latex-Teil 11 umschäumt ist. Es ist auch vorstellbar, dass mehrere PUR-Teile, beispielsweise einfach herzustellende PUR-Schaumstoffplatten, zusammengesetzt sind, um das Rahmenteil 13 zu bilden. Eine derartige Matratzengestaltung weist verschiedene Vorteile auf. Die Hauptliegefläche wird durch das punktelastische und hochwertige Latex-Material gebildet. Demgegenüber wird der Randbereich der Matratze durch das formstabilere PUR-Material gebildet. Das Rahmenteil 13 kann somit als Kantenversteifung wirken, um so die Matratze mit einer formstabilen Sitzkante zu versehen. Zusätzlich schafft die PUR-Umrahmung auch Vorteile hinsichtlich der Handhabung und des Transports der Matratze, da einerseits das Gewicht der Matratze reduziert wird und andererseits eine übermäßig starke Durchbiegung der Matratze in aufrechter Stellung verhindert wird.

Wie dargestellt, weist das Basisteil 11 über seine gesamte Oberfläche regelmäßig angeordnete Ausnehmungen 15 auf, welche wie oben beschrieben einerseits für eine ausreichende Luft- und Feuchtigkeitszirkulation sorgen und andererseits einer gezielten Härtegradanpassung dienen können.

Abgesehen von den dargestellten Beispielen sind zahlreiche weitere Kombinationsvarianten zwischen Latex-Teilen und PUR-Teilen denkbar. So können ein oder mehrere PUR-Teile beispielsweise der Ausbildung von Liegezonen dienen. Das Latex-Teil kann beispielsweise vornehmlich im Schulterbereich oder im Beckenbereich der Matratze angeordnet sein, während die übrigen Bereiche der Matratze hauptsächlich durch das PUR-Teil gebildet sind. Alternativ kann auch ein einzelnes PUR-Teil im Lendenbereich der Matratze vorgesehen sein, während alle übrigen Bereiche der Matratze durch Latex gebildet sind.

Im Folgenden wird ein Verfahren zur Herstellung des in Fig. 1 gezeigten Polsterelements beschrieben. Zunächst wird das PUR-Teil 13 auf üblichem Weg durch Polyurethan-Verschäumung hergestellt. Gegebenenfalls erfolgt ein Konturschnitt zur Formgebung. Anschließend wird das PUR-Teil 13 in einer Gießform aus einem Glasfaserverbundstoff angeordnet. Eine ausreichende Menge Latexmilch wird mittels Pressluft aufgeschäumt und als flüssiger Latex-Schaum in die Gießform gefüllt. Die Gießform wird dann mit einem Deckel aus Glasfaserverbundstoff verschlossen. Aufgrund der offenporigen Oberfläche des PUR-Teils 13 dringt der flüssige Latex-Schaum in dieses ein, typischerweise einige Millimeter tief. Anschließend wird der flüssige Latex-Schaum zu festem Latex vulkanisiert. Zu diesem Zweck wird die abgedeckte Gießform in eine Bestrahlungskammer eingebracht, in der mehrere Mikrowellenmodule die Gießform allseitig mit elektromagnetischer Mikrowellenstrahlung bestrahlen. Die Mikrowellen können den Glasfaserverbundstoff der Gießform im Wesentlichen ungehindert durchdringen und sorgen für eine gleichmäßige Erwärmung des Latex-Schaums. Probleme aufgrund der schlechten Wärmeleitfähigkeit von Polyurethan, wie sie in herkömmlich beheizten Gießformen aus Stahl typischerweise auftreten, werden durch die Mikrowellenbestrahlung vermieden. Von Bedeutung ist auch, dass sich das PUR-Teil 11 durch die Mikrowellenbestrahlung kaum erwärmt und somit die Aufheizrate nicht nennenswert beeinflusst. Die Bestrahlung wird so lange durchgeführt, bis eine komplette Vulkanisation des flüssigen Latex-Schaums erreicht ist. Anschließend wird der Deckel der Gießform entfernt und der fertige Matratzenkern wird der Form entnommen. Dieser wird dann gewaschen, getrocknet und gegebenenfalls nachvulkanisiert. Optional kann der so hergestellte Matratzenkern in einen äußeren Textilbezug eingefügt werden.

Durch das Eindringen des flüssigen Latex-Schaums in das PUR-Teil 13 und das anschließende Verfestigen des Latex-Schaums mittels Vulkanisation bildet sich an den Kontaktflächen zwischen Latex-Teil 11 und PUR-Teil 13 eine stabile Verbindung aus. Somit kann durch Anwendung des Umschäumungsprinzips auf zeitaufwändige und kostenintensive Verklebungen, Verzapfungen oder andere Befestigungsverfahren verzichtet werden.

### Bezugszeichenliste

- 11: erstes Teil
- 12: Steg
- 13: zweites Teil
- 14: Außenseite
- 15: Ausnehmung
- 16: Außenseite

## Patentansprüche

1. Polsterelement für ein Sitz-/Liegemöbel, insbesondere Matratze oder Matratzenkern, mit einem ersten Teil (11) und einem zweiten Teil (13), wobei das erste Teil (11) aus vulkanisiertem Latex-Schaum und das zweite Teil (13) aus einem nicht vulkanisierten Material besteht,
**dadurch gekennzeichnet,**
**dass** das erste Teil (11) oder das zweite Teil (13) von dem jeweils anderen Teil umschäumt ist.

2. Polsterelement nach Anspruch 1,
**dadurch gekennzeichnet,**
**dass** das zweite Teil (13) aus einem offenporigen Material, bevorzugt aus einem Polyurethan-Schaumstoff, besonders bevorzugt aus einem PUR-Kaltschaum, besteht.

3. Polsterelement nach Anspruch 2,
**dadurch gekennzeichnet,**
**dass** der vulkanisierte Latex-Schaum in den Poren des offenporigen Materials verankert ist.

4. Polsterelement nach einem der vorhergehenden Ansprüche,
**dadurch gekennzeichnet,**
**dass** das zweite Teil (13) von dem ersten Teil (11) umschäumt ist.

5. Polsterelement nach einem der vorhergehenden Ansprüche,
**dadurch gekennzeichnet,**
**dass** eines der beiden Teile (11, 13), insbesondere das erste Teil (11), ein Basisteil des Polsterelements bildet und/oder dass eines der beiden Teile (11, 13), insbesondere das zweite Teil (13), ein Funktionsteil des Polsterelements bildet.

6. Polsterelement nach einem der vorhergehenden Ansprüche,
**dadurch gekennzeichnet,**
**dass** das erste Teil (11) und das zweite Teil (13) eine erkennbar unterschiedliche Färbung aufweisen und/oder dass eines der beiden Teile (11, 13), insbesondere das zweite Teil (13), zumindest in einem Abschnitt eine Kontur mit komplexer Formgebung aufweist.

7. Polsterelement nach einem der vorhergehenden Ansprüche,
**dadurch gekennzeichnet,**
**dass** ein Abschnitt des umschäumten Teils einen Abschnitt der Außenfläche des Polsterelements bildet, wobei insbesondere eine Seite des Polsterelements im Wesentlichen durch einen Oberflächenabschnitt des ersten Teils (11) gebildet ist und die davon abgewandte Seite im Wesentlichen durch einen Oberflächenabschnitt des zweiten Teils (13) gebildet ist.

8. Polsterelement nach einem der vorhergehenden Ansprüche,
**dadurch gekennzeichnet,**
**dass** das zweite Teil (13) in einem umlaufenden Randbereich des Polsterelements angeordnet ist und insbesondere eine formstabile Sitzkante bildet und/oder dass das erste Teil (11) im Schulterbereich des Sitz-/Liegemöbels und/oder im Beckenbereich des Sitz-/Liegemöbels angeordnet ist und/oder dass das zweite Teil (13) im Lendenbereich des Sitz-/Liegemöbels angeordnet ist.

9. Polsterelement nach einem der vorhergehenden Ansprüche,
**dadurch gekennzeichnet,**
**dass** das erste Teil (11) und/ oder das zweite Teil (13) Ausnehmungen (15) aufweisen, die sich von einer Seite des Polsterelements bis zu der davon abgewandten Seite erstrecken.

10. Verfahren zur Herstellung eines Polsterelements nach einem der vorhergehenden Ansprüche,
**gekennzeichnet, durch** die folgenden Schritte:
- Herstellen des ersten Teils (11) oder des zweiten Teils (13);
- Bereitstellen einer Gießform;
- Anordnen des zuerst hergestellten Teils in der Gießform; und
- Umschäumen des in der Gießform angeordneten Teils mit Material des jeweils anderen Teils.

11. Verfahren nach Anspruch 10,
**dadurch gekennzeichnet,**
**dass** das zuerst hergestellte Teil das zweite Teil (13) bildet und/oder dass das zuerst hergestellte Teil zumindest in einem Abschnitt eine Kontur mit komplexer Formgebung aufweist und/oder dass das zuerst hergestellte Teil derart in der Gießform angeordnet wird, dass es beim Umschäumen im Wesentlichen vollständig von dem Material des jeweils anderen Teils umschlossen wird.

12. Verfahren nach Anspruch 10 oder 11,
**dadurch gekennzeichnet,**
**dass** das zuerst hergestellte Teil in einem umlaufenden Randbereich und/oder in einem zentralen Bereich der Gießform angeordnet wird.

13. Verfahren nach einem der Ansprüche 10 bis 12,
**dadurch gekennzeichnet,**
**dass** das Umschäumen des in der Gießform angeordneten Teils mit flüssigem Latex-Schaum erfolgt.

14. Verfahren nach Anspruch 13,
**dadurch gekennzeichnet,**
**dass** der flüssige Latex-Schaum nach dem Füllen der Gießform vulkanisiert wird, insbesondere durch Bestrahlung der Gießform mit elektromagnetischer Mikrowellenstrahlung, wobei die Bestrahlung der Gießform mit elektromagnetischer Mikrowellenstrahlung insbesondere allseitig in einer die gesamte Gießform aufnehmenden Bestrahlungskammer erfolgt.

15. Verfahren nach einem der Ansprüche 10 bis 14,
**dadurch gekennzeichnet,**
**dass** die Gießform aus einem Glasfaserverbundstoff besteht und/oder dass mindestens ein Abschnitt der Innenfläche der Gießform stiftartige Vorsprünge aufweist, die sich vom Boden der Gießform bis zu einer maximalen Füllhöhe erstrecken.
